# EUROPEAN PATENT APPLICATION

(11) **EP 4 668 928 A1**
(43) Date of publication of application: **24.12.2025**
(21) Application number: 23922042.9
(22) Date of filing: 17.02.2023
(51) Int. Cl.: H04W 72/04, H04W 74/08

(54) **FREQUENCY DOMAIN RESOURCE CONFIGURATION METHOD AND APPARATUS**

(71) Applicant: Beijing Xiaomi Mobile Software Co., Ltd., Beijing 100085 (CN)
(72) Inventor: QIAO, Xuemei, Beijing 100085 (CN); LI, Yanhua, Beijing 100085 (CN)
(74) Representative: Stöckeler, Ferdinand
(86) International application number: PCT/CN2023/076982
(87) International publication number: WO 2024/168911

(57) **Abstract**

Disclosed in embodiments of the present disclosure are a frequency domain resource configuration method and apparatus. The method comprises: receiving configuration information sent by a network device, the configuration information being used for configuring frequency domain resources of a random access message (MsgA) physical uplink shared channel (PUSCH) in two-step random access; determining a target frequency domain resource according to the configuration information; and sending the MsgA PUSCH to the network device by using the target frequency domain resource, so that the transmission of an uplink channel in the two-step random access can be carried out within the baseband processing capability range of a reduced capability terminal device, and meanwhile, the network device can be ensured to correctly receive, thereby effectively improving the channel transmission performance and ensuring the reliability of communication transmission.

## Description

### FIELD

The present disclosure relates to the field of communication technologies, and in particular relates to a method and an apparatus for configuring a frequency domain resource.

### BACKGROUND

Release 18 proposes to further reduce a bandwidth of a reduced capability (RedCap) terminal to support low-data-rate and cost-sensitive service types such as a factory sensor. Moreover, it is still possible to support configuration of a subcarrier spacing such as 15KHz and 30KHz, resulting in reduced frequency domain resources available within a bandwidth range. Therefore, it is necessary to consider how to ensure channel transmission of an evolved reduced capability (eRedCap) terminal.

### SUMMARY

According to a first aspect of embodiments of the present disclosure, there is provided a method for configuring a frequency domain resource, performed by a terminal, including:
receiving configuration information sent by a network device, in which the configuration information is used to configure a frequency domain resource of a random access message MsgA physical uplink shared channel (PUSCH) in a two-step random access;
determining a target frequency domain resource according to the configuration information; and
sending the MsgA PUSCH to the network device by using the target frequency domain resource,
in which the terminal is an evolved reduced capability (eRedCap) terminal.

According to a second aspect of embodiments of the present disclosure, there is provided a method for configuring a frequency domain resource, performed by a network device, including:
sending configuration information to a terminal, in which the configuration information is used to configure a frequency domain resource of a random access message MsgA physical uplink shared channel (PUSCH) in a two-step random access; and
receiving the MsgA PUSCH sent by the terminal using a target frequency domain resource, in which the target frequency domain resource is determined by the terminal according to the configuration information,
in which the terminal is an evolved reduced capability (eRedCap) terminal.

According to a third aspect of embodiments of the present disclosure, there is provided an apparatus for configuring a frequency domain resource, applied to a terminal, including:
a transceiver unit configured to receive configuration information sent by a network device, in which the configuration information is used to configure a frequency domain resource of a random access message MsgA physical uplink shared channel (PUSCH) in a two-step random access; and
a processing unit configured to determine a target frequency domain resource according to the configuration information;
in which the transceiver unit is further configured to send the MsgA PUSCH to the network device by using the target frequency domain resource,
in which the terminal is an evolved reduced capability (eRedCap) terminal.

According to a fourth aspect of embodiments of the present disclosure, there is provided an apparatus for configuring a frequency domain resource, applied to a network device, including:
a transceiver unit configured to send configuration information to a terminal, in which the configuration information is used to configure a frequency domain resource of a random access message MsgA physical uplink shared channel (PUSCH) in a two-step random access;
in which the transceiver unit is further configured to receive the MsgA PUSCH sent by the terminal using a target frequency domain resource, in which the target frequency domain resource is determined by the terminal according to the configuration information,
in which the terminal is an evolved reduced capability (eRedCap) terminal.

According to a fifth aspect of embodiments of the present disclosure, there is provided a communication apparatus, including: a processor, and a memory storing a computer program; in which the processor executes the computer program stored in the memory to enable the apparatus to perform the method described in the first aspect of embodiments.

According to a sixth aspect of embodiments of the present disclosure, there is provided a communication apparatus, including: a processor, and a memory storing a computer program; in which the processor executes the computer program stored in the memory to enable the apparatus to perform the method described in the second aspect of embodiments.

According to a seventh aspect of embodiments of the present disclosure, there is provided a communication apparatus, including: a processor, and an interface circuit; in which the interface circuit is configured to receive code instructions and transmit the code instructions to the processor; and the processor is configured to execute the code instructions to perform the method described in the first aspect of embodiments.

According to an eighth aspect of embodiments of the present disclosure, there is provided a communication apparatus, including: a processor, and an interface circuit; in which the interface circuit is configured to receive code instructions and transmit the code instructions to the processor; and the processor is configured to execute the code instructions to perform the method described in the second aspect of embodiments.

According to a ninth aspect of embodiments of the present disclosure, there is provided a computer-readable storage medium for storing instructions that, when executed, cause the method described in the first aspect of embodiments to be implemented.

According to a tenth aspect of embodiments of the present disclosure, there is provided a computer-readable storage medium for storing instructions that, when executed, cause the method described in the second aspect of embodiments to be implemented.

According to an eleventh aspect of embodiments of the present disclosure, there is provided a computer program that, when running on a computer, enables a computer to execute the method for configuring a frequency domain resource described in the first aspect of embodiments.

According to a twelfth aspect of embodiments of the present disclosure, there is provided a computer program that, when running on a computer, enables a computer to execute the method for configuring a frequency domain resource described in the second aspect of embodiments.

According to the method and the apparatus for configuring a frequency domain resource provided by the embodiments of the present disclosure, the configuration information sent by the network device is received, the configuration information is used to configure the frequency domain resource of the MsgA PUSCH in the two-step random access, the target frequency domain resource is determined according to the configuration information, and the MsgA PUSCH is sent to the network device by using the target frequency domain resource, such that transmission on the uplink channel in the two-step random access may be performed within a baseband processing capability range of the RedCap terminal, while ensuring correct reception of the network device, thereby effectively improving the channel transmission performance and ensuring the reliability of communication transmission.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate embodiments of the present disclosure or technical solutions in the prior art, a brief description of drawings used in embodiments or in the prior art descriptions is given below.
FIG. 1 is a schematic architectural diagram illustrating a communication system according to an embodiment of the present disclosure;
FIG. 2 is a schematic flowchart illustrating a method for configuring a frequency domain resource according to an embodiment of the present disclosure;
FIG. 3 is a schematic flowchart illustrating a method for configuring a frequency domain resource according to an embodiment of the present disclosure;
FIG. 4 is a schematic flowchart illustrating a method for configuring a frequency domain resource according to an embodiment of the present disclosure;
FIG. 5 is a schematic flowchart illustrating a method for configuring a frequency domain resource according to an embodiment of the present disclosure;
FIG. 6 is a schematic diagram illustrating a target frequency domain resource according to an embodiment of the present disclosure;
FIG. 7 is a schematic flowchart illustrating a method for configuring a frequency domain resource according to an embodiment of the present disclosure;
FIG. 8 is a schematic flowchart illustrating a method for configuring a frequency domain resource according to an embodiment of the present disclosure;
FIG. 9 is a schematic block diagram illustrating an apparatus for configuring a frequency domain resource according to an embodiment of the present disclosure;
FIG. 10 is a schematic block diagram illustrating an apparatus for configuring a frequency domain resource according to an embodiment of the present disclosure;
FIG. 11 is a schematic block diagram illustrating another apparatus for configuring a frequency domain resource according to an embodiment of the present disclosure;
FIG. 12 is a schematic block diagram illustrating a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit embodiments of the present disclosure. As used in the embodiments of the present disclosure and the appended claims, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Reference will be made in detail to embodiments of the present disclosure, examples of which are shown in the drawings. The same or similar elements or the elements having the same or similar functions are denoted by the same or similar reference numerals throughout the descriptions. The embodiments described herein with reference to drawings are illustrative, and used to explain the present disclosure. The embodiments shall not be construed to limit the present disclosure.

In order to better understand the method for configuring a frequency domain resource disclosed in embodiments of the present disclosure, a communication system to which the embodiments of the present disclosure are applicable is first described below.

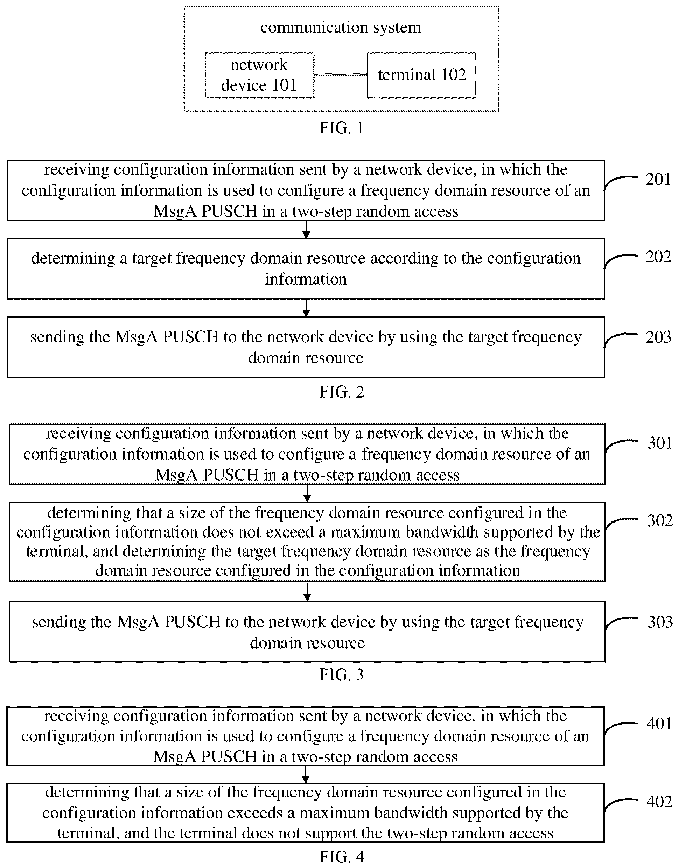

Referring to FIG. 1, FIG. 1 is a schematic architectural diagram illustrating a communication system according to an embodiment of the present disclosure. The communication system may include, but is not limited to, one first network device and one terminal. The number and form of the devices shown in FIG. 1 are merely used as an example, and do not constitute a limitation on the embodiments of the present disclosure. In practical applications, two or more network devices and two or more terminals may be included. The communication system shown in FIG. 1 is illustrated as an example where one network device 101 and one terminal 102 are included.

It should be noted that the technical solutions of the embodiments of the present disclosure may be applied to various communication systems, such as a long term evolution (LTE) system, a 5th generation (5G) mobile communication system, a 5G new radio (NR) system, or other new mobile communication systems in the future, etc.

The network device 101 in embodiments of the present disclosure is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. Embodiments of the present disclosure do not limit specific technology and specific device form used by the network device. The network device according to embodiments of the present disclosure may be composed of a central unit (CU) and distributed units (DUs), and the CU may also be referred to as a control unit. Using the CU-DU structure allows to split a protocol layer of the network device, such as a base station, a part of functions of the protocol layer is centrally controlled in the CU, some or all of the remaining functions of the protocol layer are distributed in the DUs, and the CU centrally controls the DUs.

The terminal 102 in embodiments of the present disclosure is an entity at a user side for receiving or transmitting signals, such as a mobile phone. The terminal may also be referred to as a terminal, a user equipment (UE), a mobile station (MS), a mobile terminal (MT), etc.; or may also be a RedCap terminal, an eRedCap terminal, a non-eRedCap terminal, etc.. The terminal may be a device with a communication function, such as an automobile, a smart automobile, a mobile phone, a wearable device, a pad, a computer with a wireless transceiving function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technology and the specific device form used by the network device.

Release 18 proposes to further reduce a bandwidth of a reduced capability (RedCap) terminal to support low-data-rate and cost-sensitive service types such as a factory sensor. Moreover, it is still possible to support configuration of a subcarrier spacing such as 15KHz and 30KHz, resulting in reduced frequency domain resources available within a bandwidth range.

In a case where a control channel bandwidth of an eRedCap terminal is reduced to 5 MHz, there are at most 25 available resource blocks (RBs) in a case where a sub-carrier spacing (SCS) is 15 KHz, and at most 11 or 12 available RBs in a case where the SCS is 30 KHz.

In the related art, the protocol stipulates that a frequency domain resource allowed to be configured for a transmission of a random access message (MsgA) physical uplink shared channel (PUSCH) in a two-step random access channel (2-step RACH) includes at most 32 RBs per PUSCH occasion (PO).

Therefore, in a case where the channel bandwidth supported by the eRedCap terminal is reduced and the frequency domain resources available within the bandwidth range are reduced, it is required to consider how to ensure transmission of the MsgA PUSCH by the eRedCap terminal.

It may be understood that the communication system described in embodiments of the present disclosure is for a purpose of describing the technical solutions of embodiments of the present disclosure more clearly, and does not constitute a limitation on the technical solutions according to embodiments of the present disclosure. It may be understood by those skilled in the art that with the evolution of the system architecture and the emergence of new service scenarios, the technical solutions according to embodiments of the present disclosure are also applicable to similar technical problems.

The method and apparatus for configuring a frequency domain resource provided in the present disclosure will be described in detail below with reference to the accompanying drawings.

Referring to FIG. 2, FIG. 2 is a schematic flowchart illustrating a method for configuring a frequency domain resource according to an embodiment of the present disclosure. It should be noted that the method for configuring a frequency domain resource according to this embodiment of the present disclosure is performed by a terminal. This method may be executed independently or in combination with any other embodiment of the present disclosure. As shown in FIG. 2, the method may include the following steps.

In step 201, configuration information sent by a network device is received, in which the configuration information is used to configure a frequency domain resource of an MsgA PUSCH in a two-step random access.

In each embodiment of the present disclosure, the terminal may be a RedCap terminal or an eRedCap terminal.

In embodiments of the present disclosure, the terminal may receive the configuration information sent by the network device, in which the configuration information is used to configure the frequency domain resource of the MsgA PUSCH in the two-step random access.

In some embodiments, the configuration information may include any one or more of the following parameters: a number of frequency domain resource units included in each PO, a number of POs, a starting frequency domain resource unit of the frequency domain resource, a modulation and coding scheme (MCS), a demodulation reference signal (DMRS) and the like.

In embodiments of the present disclosure, the frequency domain resource unit may be a resource block (RB), a physical resource block (PRB), a virtual resource block (VRB), a common resource block (CRB) and the like.

In some implementations, the frequency domain resource configured in the configuration information does not exceed a maximum bandwidth supported by the terminal.

In some implementations, the frequency domain resource configured in the configuration information exceeds the maximum bandwidth supported by the terminal.

In some implementations, configuration information sent by the network device to the eRedCap terminal is different from configuration information sent by the network device to a non-eRedCap terminal.

In step 202, a target frequency domain resource is determined according to the configuration information.

In embodiments of the present disclosure, the terminal may determine the frequency domain resource configured by the network device for the terminal according to the received configuration information, and may determine the target frequency domain resource according to the configured frequency domain resource. The target frequency domain resource is a frequency domain resource used by the terminal when sending the MsgA PUSCH.

It may be understood that the target frequency domain resource is within a baseband processing capability range of the terminal. That is, the target frequency domain resource does not exceed the maximum bandwidth supported by the terminal.

It may be understood that in embodiments of the present disclosure, the bandwidth may be a bandwidth or a bandwidth part (BWP).

In some implementations, the size of the frequency domain resource configured in the configuration information does not exceed the maximum bandwidth supported by the terminal, and the target frequency domain resource is the frequency domain resource configured in the configuration information.

In some implementations, the size of the frequency domain resource configured in the configuration information exceeds the maximum bandwidth supported by the terminal, and the terminal does not support the two-step random access.

In some implementations, the size of the frequency domain resource configured in the configuration information exceeds the maximum bandwidth supported by the terminal, and the terminal may determine the target frequency domain resource from the configured frequency domain resource according to a protocol agreement or indication information sent by the network device.

Optionally, a frequency domain resource unit with a lowest frequency in the target frequency domain resource is aligned with a frequency domain resource unit with the lowest frequency in the configured frequency domain resource; or
a frequency domain resource unit with a highest frequency in the target frequency domain resource is aligned with a frequency domain resource unit with the highest frequency in the configured frequency domain resource; or
a central frequency domain resource unit of the target frequency domain resource is aligned with a central frequency domain resource unit of the configured frequency domain resource.

Optionally, the indication information sent by the network device indicates any one or more of the following parameters:
a starting frequency domain resource unit of the target frequency domain resource;
an ending frequency domain resource unit of the target frequency domain resource; or
the number of frequency domain resource units occupied by the target frequency domain resource.

In some implementations, the terminal may also calculate a size of a transmission block (TB) of the MsgA PUSCH.

Optionally, the size of the TB is calculated according to the number of frequency domain resource units occupied by the configured frequency domain resource; or
the size of the TB is calculated according to the number of frequency domain resource units occupied by the target frequency domain resource.

Optionally, a reference signal receiving power (RSRP) threshold corresponding to the two-step random access of the eRedCap terminal is higher than an RSRP threshold corresponding to the two-step random access of the non-eRedCap terminal in a case where the size of the TB is calculated according to the number of frequency domain resource units occupied by the configured frequency domain resource.

In some implementations, the configuration information sent by the network device to the eRedCap terminal is different from the configuration information sent by the network device to the non-eRedCap terminal. That is, the network device may separately configure the frequency domain resource for the eRedCap terminal.

In some implementations, the terminal may also send first information to the network device, in which the first information indicates that a type of the terminal is the eRedCap terminal.

Optionally, the first information is included in an MsgA physical random access channel (PRACH); or
the first information is included in a DMRS of the MsgA PUSCH; or
the first information is implicitly indicated via the target frequency domain resource used for transmission of the MsgA PUSCH.

In some implementations, the embodiments of the present disclosure further include the following step.

In step 203, the MsgA PUSCH is sent to the network device by using the target frequency domain resource.

The terminal may send the MsgA PUSCH to the network device by using the determined target frequency domain resource.

In summary, the configuration information sent by the network device is received, in which the configuration information is used to configure the frequency domain resource of the MsgA PUSCH in the two-step random access, the target frequency domain resource is determined according to the configuration information, and the MsgA PUSCH is sent to the network device by using the target frequency domain resource, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

Referring to FIG. 3, FIG. 3 is a schematic flowchart illustrating a method for configuring a frequency domain resource according to an embodiment of the present disclosure. It should be noted that the method for configuring a frequency domain resource according to this embodiment of the present disclosure is performed by a terminal. This method may be executed independently or in combination with any other embodiment of the present disclosure. As shown in FIG. 3, the method may include the following steps.

In step 301, configuration information sent by a network device is received, in which the configuration information is used to configure a frequency domain resource of an MsgA PUSCH in a two-step random access.

In each embodiment of the present disclosure, the terminal may be a RedCap terminal or an eRedCap terminal.

In embodiments of the present disclosure, the terminal may receive the configuration information sent by the network device, in which the configuration information is used to configure the frequency domain resource of the MsgA PUSCH in the two-step random access.

In some embodiments, the configuration information may include any one or more of the following parameters: the number of frequency domain resource units included in each PO, the number of POs, a starting frequency domain resource unit of the frequency domain resource, an MCS, a DMRS and the like.

In embodiments of the present disclosure, the frequency domain resource unit may be an RB, a PRB, a VRB, a CRB and the like.

In step 302, a size of the frequency domain resource configured in the configuration information does not exceed a maximum bandwidth supported by the terminal, and the target frequency domain resource is determined as the frequency domain resource configured in the configuration information.

In embodiments of the present disclosure, the size of the frequency domain resource configured in the configuration information does not exceed the maximum bandwidth supported by the terminal, and the terminal may directly use the configured frequency domain resource to send the MsgA PUSCH.

As an example, for a terminal in which a control channel bandwidth is reduced to 5 MHz and an SCS is 15 KHz, the frequency domain resource configured for each PO in the configuration information does not exceed 25 RBs. For a terminal in which the control channel bandwidth is reduced to 5 MHz and the SCS is 30 KHz, the frequency domain resource configured for each PO in the configuration information does not exceed 11 or 12 RBs.

In some implementations, the embodiments of the present disclosure further include the following step.

In step 303, the MsgA PUSCH is sent to the network device by using the target frequency domain resource.

The terminal may send the MsgA PUSCH to the network device by using the determined target frequency domain resource (that is, the frequency domain resource configured in the configuration information).

That is, in embodiments of the present disclosure, for a serving cell supporting both the eRedCap terminal and the non-eRedCap terminal, in a case where the 2-step RACH is configured, the frequency domain resource configured by the network device for each PO of the MsgA PUSCH is limited to not exceed a baseband bandwidth of the eRedCap terminal at the maximum, that is, the frequency domain resource configured for each PO of the MsgA PUSCH of the non-eRedCap terminal does not exceed the baseband bandwidth of the eRedCap terminal.

In summary, the configuration information sent by the network device is received, in which the configuration information is used to configure the frequency domain resource of the MsgA PUSCH in the two-step random access, the size of the frequency domain resource configured in the configuration information does not exceed the maximum bandwidth supported by the terminal, the target frequency domain resource is determined as the frequency domain resource configured in the configuration information according to the configuration information, and the MsgA PUSCH is sent to the network device by using the target frequency domain resource, such that the transmission on the uplink channel in the two-step random access may be performed within the baseband processing capability range of the RedCap terminal, while ensuring correct reception of the network device, thereby effectively improving the channel transmission performance and ensuring the reliability of communication transmission.

Referring to FIG. 4, FIG. 4 is a schematic flowchart illustrating a method for configuring a frequency domain resource according to an embodiment of the present disclosure. It should be noted that the method for configuring a frequency domain resource according to this embodiment of the present disclosure is performed by a terminal. This method may be executed independently or in combination with any other embodiment of the present disclosure. As shown in FIG. 4, the method may include the following steps.

In step 401, configuration information sent by a network device is received, in which the configuration information is used to configure a frequency domain resource of an MsgA PUSCH in a two-step random access.

In each embodiment of the present disclosure, the terminal may be a RedCap terminal or an eRedCap terminal.

In embodiments of the present disclosure, the terminal may receive the configuration information sent by the network device, in which the configuration information is used to configure the frequency domain resource of the MsgA PUSCH in the two-step random access.

In some embodiments, the configuration information may include any one or more of the following parameters: the number of frequency domain resource units included in each PO, the number of POs, a starting frequency domain resource unit of the frequency domain resource, an MCS, a DMRS and the like.

In embodiments of the present disclosure, the frequency domain resource unit may be an RB, a PRB, a VRB, a CRB and the like.

In step 402, it is determined that a size of the frequency domain resource configured in the configuration information exceeds a maximum bandwidth supported by the terminal, and the terminal does not support the two-step random access.

In embodiments of the present disclosure, in a case where the terminal determines that the size of the frequency domain resource configured in the configuration information exceeds the maximum bandwidth supported by the terminal, the terminal does not support the two-step random access. That is, the terminal does not complete a process of the two-step random access and does not send the MsgA PUSCH.

That is, in embodiments of the present disclosure, for a serving cell supporting both the eRedCap terminal and the non-eRedCap terminal, the frequency domain resource configured by the network device for each PO of the MsgA PUSCH is allowed to exceed a baseband bandwidth of the eRedCap terminal. In a case where the frequency domain resource configured by the network device for each PO of the MsgA PUSCH of the eRedCap terminal exceeds the baseband bandwidth of the eRedCap terminal, the eRedCap terminal does not support the two-step random access, that is, the eRedCap terminal does not send the MsgA PUSCH.

In summary, the configuration information sent by the network device is received, in which the configuration information is used to configure the frequency domain resource of the MsgA PUSCH in the two-step random access, the size of the frequency domain resource configured in the configuration information exceeds the maximum bandwidth supported by the terminal, and the terminal does not support the two-step random access, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

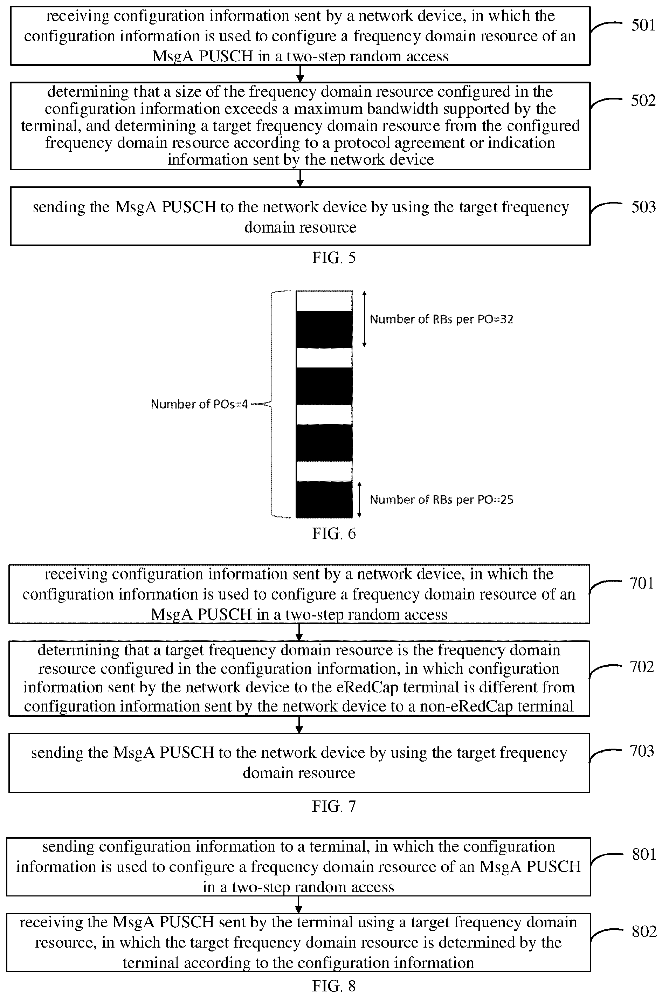

Referring to FIG. 5, FIG. 5 is a schematic flowchart illustrating a method for configuring a frequency domain resource according to an embodiment of the present disclosure. It should be noted that the method for configuring a frequency domain resource according to this embodiment of the present disclosure is performed by a terminal. This method may be executed independently or in combination with any other embodiment of the present disclosure. As shown in FIG. 5, the method may include the following steps.

In step 501, configuration information sent by a network device is received, in which the configuration information is used to configure a frequency domain resource of an MsgA PUSCH in a two-step random access.

In each embodiment of the present disclosure, the terminal may be a RedCap terminal or an eRedCap terminal.

In embodiments of the present disclosure, the terminal may receive the configuration information sent by the network device, in which the configuration information is used to configure the frequency domain resource of the MsgA PUSCH in the two-step random access.

In some embodiments, the configuration information may include any one or more of the following parameters: the number of frequency domain resource units included in each PO, the number of POs, a starting frequency domain resource unit of the frequency domain resource, an MCS, a DMRS and the like.

In embodiments of the present disclosure, the frequency domain resource unit may be an RB, a PRB, a VRB, a CRB and the like.

In step 502, a size of the frequency domain resource configured in the configuration information exceeds a maximum bandwidth supported by the terminal, and a target frequency domain resource is determined from the configured frequency domain resource according to a protocol agreement or indication information sent by the network device.

In embodiments of the present disclosure, the size of the frequency domain resource configured in the configuration information exceeds the maximum bandwidth supported by the terminal, and the terminal may determine the target frequency domain resource from the configured frequency domain resource according to the protocol agreement or the indication information sent by the network device. The target frequency domain resource is a frequency domain resource used by the terminal when sending the MsgA PUSCH.

It may be understood that the target frequency domain resource is within a baseband processing capability range of the terminal, that is, the target frequency domain resource does not exceed the maximum bandwidth supported by the terminal.

Optionally, a frequency domain resource unit with a lowest frequency in the target frequency domain resource is aligned with a frequency domain resource unit with the lowest frequency in the configured frequency domain resource (bottom alignment); or
a frequency domain resource unit with a highest frequency in the target frequency domain resource is aligned with a frequency domain resource unit with the highest frequency in the configured frequency domain resource (top alignment); or
a central frequency domain resource unit of the target frequency domain resource is aligned with a central frequency domain resource unit of the configured frequency domain resource (center frequency domain position alignment).

Optionally, the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

As an example, as shown in FIG. 6, FIG. 6 is a schematic diagram illustrating a method for determining a target frequency domain resource according to an embodiment of the present disclosure. The frequency domain resource configured for each PO in the configuration information sent by the network device includes 32 RBs, and four POs are configured. The terminal may determine the target frequency domain resource (the shaded part in the figure) from the configured frequency domain resource. Each PO of the target frequency domain resource includes 25 RBs (for a terminal with a bandwidth of 5MHz and an SCS of 15KHz). The frequency domain resource unit with the lowest frequency in the target frequency domain resource is aligned with the frequency domain resource unit with the lowest frequency in the configured frequency domain resource (that is, bottom alignment).

A position of the target frequency domain resource in the configured frequency domain resource may be pre-agreed upon through a protocol, such as agreeing on any one of bottom alignment, top alignment, or center frequency domain position alignment. Optionally, the indication information sent by the network device may indicate the position of the target frequency domain resource in the configured frequency domain resource, for example, indicating any one of bottom alignment, top alignment, or center frequency domain position alignment. Optionally, the network device may also indicate a starting position (the starting frequency domain resource unit) of the target frequency domain resource in the configured frequency domain resource and/or the number of frequency domain resource units of the target frequency domain resource. Optionally, the network device may also indicate an ending position (the ending frequency domain resource unit) of the target resource in the configured frequency domain resource and/or the number of frequency domain resource units of the target resource. Optionally, the network device may also indicate the ending frequency domain resource unit of the target resource, and the starting position of the target resource is the starting frequency domain resource unit of the configured frequency domain resource by default. Optionally, the network device may also indicate the starting frequency domain resource unit of the target resource, and the number of frequency domain resource units occupied by the target frequency domain resource may be a maximum value supported by the terminal by default, or the like. According to the actual situation, any one or more of the above parameters may be determined according to the protocol agreement or the indication of the network device, which is not limited in the present disclosure.

It may be understood that the target frequency domain resource does not exceed the maximum bandwidth supported by the terminal, the target frequency domain resource may be equal to the maximum bandwidth, or may be less than the maximum bandwidth.

Moreover, it may be understood that the terminal may determine the target frequency domain resource according to the protocol agreement or the indication information sent by the network device. The indication information sent by the network device may be indicated explicitly or implicitly, which is not limited in the present disclosure.

In some implementations, the terminal may also calculate a size of a TB of the MsgA PUSCH.

Optionally, the size of the TB is calculated according to the number of frequency domain resource units occupied by the configured frequency domain resource; or the size of the TB is calculated according to the number of frequency domain resource units occupied by the target frequency domain resource.

Optionally, in a case where the size of the TB is calculated according to the number of frequency domain resource units occupied by the configured frequency domain resource, since a size of the configured frequency domain resource is larger than the bandwidth of the terminal, there may be a problem that an actual code rate is high. In order to ensure the transmission performance of the MsgA PUSCH of the eRedCap terminal, a separate RSRP threshold may be introduced for a two-step random access of the eRedCap terminal. The RSRP threshold corresponding to the two-step random access of the eRedCap terminal may be higher than an RSRP threshold corresponding to the two-step random access of a non-eRedCap terminal. This means that a 2-step RACH transmission is enabled only in a case where the link quality of the terminal is relatively good. In this case, even if the actual code rate is relatively high, a transmission of the MsgA PUSCH may still be successfully performed.

In some implementations, the terminal may also send first information to the network device, in which the first information indicates that a type of the terminal is the eRedCap terminal.

Optionally, the first information is included in an MsgA PRACH; or
the first information is included in a DMRS of the MsgA PUSCH; or
the first information is implicitly indicated via the target frequency domain resource used for transmission of the MsgA PUSCH.

In some implementations, the embodiments of the present disclosure further include the following step.

In step 503, the MsgA PUSCH is sent to the network device by using the target frequency domain resource.

The terminal may send the MsgA PUSCH to the network device by using the determined target frequency domain resource (that is, the frequency domain resource configured in the configuration information).

That is, in embodiments of the present disclosure, for a cell that supports access of both the eRedCap terminal and the non-eRedCap terminal, the frequency domain resource configured for each PO of the MsgA PUSCH of the non-eRedCap terminal is allowed to exceed the baseband bandwidth of the eRedCap terminal. In a case where the frequency domain resource configured for each PO exceeds the baseband bandwidth of the eRedCap terminal, the eRedCap terminal may select a frequency domain width that may be processed by its baseband bandwidth to perform processing and sending of the MsgA PUSCH.

In summary, the configuration information sent by the network device is received, in which the configuration information is used to configure the frequency domain resource of the MsgA PUSCH in the two-step random access, the size of the frequency domain resource configured in the configuration information exceeds the maximum bandwidth supported by the terminal, the target frequency domain resource is determined from the configured frequency domain resource according to the protocol agreement or the indication information sent by the network device, and the MsgA PUSCH is sent to the network device by using the target frequency domain resource, such that the transmission on the uplink channel in the two-step random access may be performed within the baseband processing capability range of the RedCap terminal, while ensuring correct reception of the network device, thereby effectively improving the channel transmission performance and ensuring the reliability of communication transmission.

Referring to FIG. 7, FIG. 7 is a schematic flowchart illustrating a method for configuring a frequency domain resource according to an embodiment of the present disclosure. It should be noted that the method for configuring a frequency domain resource according to this embodiment of the present disclosure is performed by a terminal. This method may be executed independently or in combination with any other embodiment of the present disclosure. As shown in FIG. 7, the method may include the following steps.

In step 701, configuration information sent by a network device is received, in which the configuration information is used to configure a frequency domain resource of an MsgA PUSCH in a two-step random access.

In each embodiment of the present disclosure, the terminal may be a RedCap terminal or an eRedCap terminal.

In embodiments of the present disclosure, the terminal may receive the configuration information sent by the network device, in which the configuration information is used to configure the frequency domain resource of the MsgA PUSCH in the two-step random access.

In some embodiments, the configuration information may include any one or more of the following parameters: the number of frequency domain resource units included in each PO, the number of POs, a starting frequency domain resource unit of the frequency domain resource, an MCS, a DMRS and the like.

In embodiments of the present disclosure, the frequency domain resource unit may be an RB, a PRB, a VRB, a CRB and the like.

In step 702, it is determined that a target frequency domain resource is the frequency domain resource configured in the configuration information, in which configuration information sent by the network device to the eRedCap terminal is different from configuration information sent by the network device to a non-eRedCap terminal.

In embodiments of the present disclosure, the configuration information sent by the network device to the eRedCap terminal is different from the configuration information sent by the network device to the non-eRedCap terminal. That is, the network device may configure a separate frequency domain resource for the eRedCap terminal. The terminal may determine that the target resource is the configured frequency domain resource.

It may be understood that the separate frequency domain resource configured by the network device does not exceed a maximum bandwidth supported by the terminal, the separate frequency domain resource may be equal to the maximum bandwidth or may be smaller than the maximum bandwidth.

In embodiments of the present disclosure, since the MsgA PUSCH of the eRedCap terminal uses the separate frequency domain resource, the network device also needs to redetermine a mapping relationship between the frequency domain resource of the MsgA PUSCH of the eRedCap terminal and the frequency domain resource of the MsgA PRACH.

In some implementations, in order to reduce signaling overhead, a mapping relationship between the frequency domain resource of the MsgA PUSCH of the eRedCap terminal and the frequency domain resource of the MsgA PRACH of the non-eRedCap terminal may be determined.

In some implementations, the embodiments of the present disclosure further include the following step.

In step 703, the MsgA PUSCH is sent to the network device by using the target frequency domain resource.

The terminal may send the MsgA PUSCH to the network device by using the determined target frequency domain resource (that is, the frequency domain resource configured in the configuration information).

That is, in embodiments of the present disclosure, for a cell that supports access of both the eRedCap terminal and the non-eRedCap terminal, the frequency domain resource of each PO of the MsgA PUSCH configured for the non-eRedCap terminal is allowed to exceed a baseband bandwidth of the eRedCap terminal. The network device may configure the separate frequency domain resource for the eRedCap terminal. The configuration information for configuring the frequency domain resource of the MsgA PUSCH of the eRedCap terminal may include any one or more of the following parameters: the number of RBs included in each PO, the number of POs, a starting RB of the frequency domain resource, the MCS, the DMRS and the like.

In summary, the configuration information sent by the network device is received, in which the configuration information is used to configure the frequency domain resource of the MsgA PUSCH in the two-step random access, it is determined that the target frequency domain resource is the frequency domain resource configured in the configuration information, in which the configuration information sent by the network device to the eRedCap terminal is different from the configuration information sent by the network device to the non-eRedCap terminal, and the MsgA PUSCH is sent to the network device by using the target frequency domain resource, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

It should be noted that, according to the embodiments described in FIGS. 5 and 7, in order to ensure accurate reception on the network device side, the network device may select to perform blind detection within two frequency domain bandwidth ranges. For example, the network device may first attempt to perform decoding of the PUSCH based on 32 RBs (which may include operations such as de-OFDM, de-resource mapping, de-rate matching and decoding of the PUSCH), and if the decoding is unsuccessful, the network device may repeat decoding based on 25 RBs. Optionally, the network device receives first information sent by the terminal, and the first information may indicate that a type of the terminal is the eRedCap terminal. After obtaining the type of the terminal, the network device may perform the processing operation of a receiving end on the PUSCH according to a correct frequency domain resource width (a bandwidth supported by the terminal). The first information may be included in the MsgA PRACH, or the first information is included in the DMRS of the MsgA PUSCH, or the first information is implicitly indicated via the target frequency domain resource used for transmission of the MsgA PUSCH.

It may be understood that in a case where the first information is included in the DMRS of the MsgA PUSCH, the network device still needs to perform the blind detection on two different DMRSs.

Moreover, it may be understood that each embodiment of the present disclosure may be executed independently or may be executed together in combination with multiple embodiments. For example, in any case, the network device may configure the separate frequency domain resource for the eRedCap terminal (that is, the configuration information sent by the network device to the eRedCap terminal is different from the configuration information sent by the network device to the non-eRedCap terminal). Alternatively, the network device may also configure the separate frequency domain resource for the eRedCap terminal only in a case where the frequency domain resource configured by the network device for the non-eRedCap terminal exceeds the bandwidth of the eRedCap terminal. In a case where the network device does not configure the separate frequency domain resource for the eRedCap terminal, if the frequency domain resource configured for the non-eRedCap terminal exceeds the bandwidth of the eRedCap terminal, it may be considered that the eRedCap terminal does not support the two-step random access, or a frequency domain resource within the bandwidth range may be selected from the configured frequency domain resources.

It may also be understood that when the network device configures the frequency domain resource, it may be required to ensure that there is no overlapping (i.e., non-overlapping) between the PO of the non-eRedCap terminal and the PO of the eRedCap terminal as much as possible.

Referring to FIG. 8, FIG. 8 is a schematic flowchart illustrating a method for configuring a frequency domain resource according to an embodiment of the present disclosure. It should be noted that the method for configuring a frequency domain resource according to this embodiment of the present disclosure is performed by a network device. This method may be executed independently or in combination with any other embodiment of the present disclosure. As shown in FIG. 8, the method may include the following steps.

In step 801, configuration information is sent to a terminal, in which the configuration information is used to configure a frequency domain resource of an MsgA PUSCH in a two-step random access.

In embodiments of the present disclosure, the terminal may be a RedCap terminal or an eRedCap terminal, or may be a legacy terminal or a non-eRedCap terminal.

In embodiments of the present disclosure, the network device may send the configuration information to the terminal, in which the configuration information is used to configure the frequency domain resource of the MsgA PUSCH in the two-step random access.

In some embodiments, the configuration information may include any one or more of the following parameters: the number of frequency domain resource units included in each PO, the number of POs, a starting frequency domain resource unit of the frequency domain resource, an MCS, a DMRS and the like.

In embodiments of the present disclosure, the frequency domain resource unit may be an RB, a PRB, a VRB, a CRB and the like.

In some implementations, the frequency domain resource configured in the configuration information does not exceed a maximum bandwidth supported by the eRedCap terminal.

In some implementations, the frequency domain resource configured in the configuration information exceeds the maximum bandwidth supported by the eRedCap terminal.

In some implementations, configuration information sent by the network device to the eRedCap terminal is different from configuration information sent by the network device to the non-eRedCap terminal.

In step 802, the MsgA PUSCH sent by the terminal using a target frequency domain resource is received, in which the target frequency domain resource is determined by the terminal according to the configuration information.

In embodiments of the present disclosure, the network device may receive the MsgA PUSCH sent by the terminal using the target frequency domain resource, in which the target frequency domain resource is determined by the terminal according to the configuration information.

It may be understood that the target frequency domain resource is within a baseband processing capability range of the terminal. That is, the target frequency domain resource does not exceed the maximum bandwidth supported by the terminal.

It may be understood that in embodiments of the present disclosure, the bandwidth may be a bandwidth or a BWP.

In some implementations, the size of the frequency domain resource configured in the configuration information does not exceed the maximum bandwidth supported by the terminal, and the target frequency domain resource is the frequency domain resource configured in the configuration information.

In some implementations, the size of the frequency domain resource configured in the configuration information exceeds the maximum bandwidth supported by the terminal, and the terminal does not support the two-step random access.

In some implementations, the size of the frequency domain resource configured in the configuration information exceeds the maximum bandwidth supported by the terminal, and the terminal may determine the target frequency domain resource from the configured frequency domain resource according to a protocol agreement or indication information sent by the network device.

Optionally, a frequency domain resource unit with a lowest frequency in the target frequency domain resource is aligned with a frequency domain resource unit with the lowest frequency in the configured frequency domain resource; or
a frequency domain resource unit with a highest frequency in the target frequency domain resource is aligned with a frequency domain resource unit with the highest frequency in the configured frequency domain resource; or
a central frequency domain resource unit of the target frequency domain resource is aligned with a central frequency domain resource unit of the configured frequency domain resource.

Optionally, the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

In some implementations, the network device may perform blind detection on the configured frequency domain resource to decode the MsgA PUSCH, and in response to a failure to decode the MsgA PUSCH, the network device may perform the blind detection according to a frequency domain resource corresponding to the eRedCap terminal to decode the MsgA PUSCH.

In some implementations, the network device may receive first information sent by the terminal, in which the first information indicates that a type of the terminal is the eRedCap terminal.

Optionally, the first information is included in an MsgA PRACH; or
the first information is included in a DMRS of the MsgA PUSCH; or
the first information is implicitly indicated via the target frequency domain resource used for transmission of the MsgA PUSCH.

In summary, the configuration information is sent to the terminal, in which the configuration information is used to configure the frequency domain resource of the MsgA PUSCH in the two-step random access, and the MsgA PUSCH sent by the terminal using the target frequency domain resource is received, in which the target frequency domain resource is determined by the terminal according to the configuration information, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

Corresponding to the method for configuring a frequency domain resource provided in the above embodiments, the present disclosure also provides an apparatus for configuring a frequency domain resource. Since the apparatus for configuring a frequency domain resource provided in embodiments of the present disclosure corresponds to the method provided in the above embodiments, the implementation of the method for configuring a frequency domain resource is also applicable to the apparatus for configuring a frequency domain resource provided in the following embodiments, and will not be described in detail in the following embodiments.

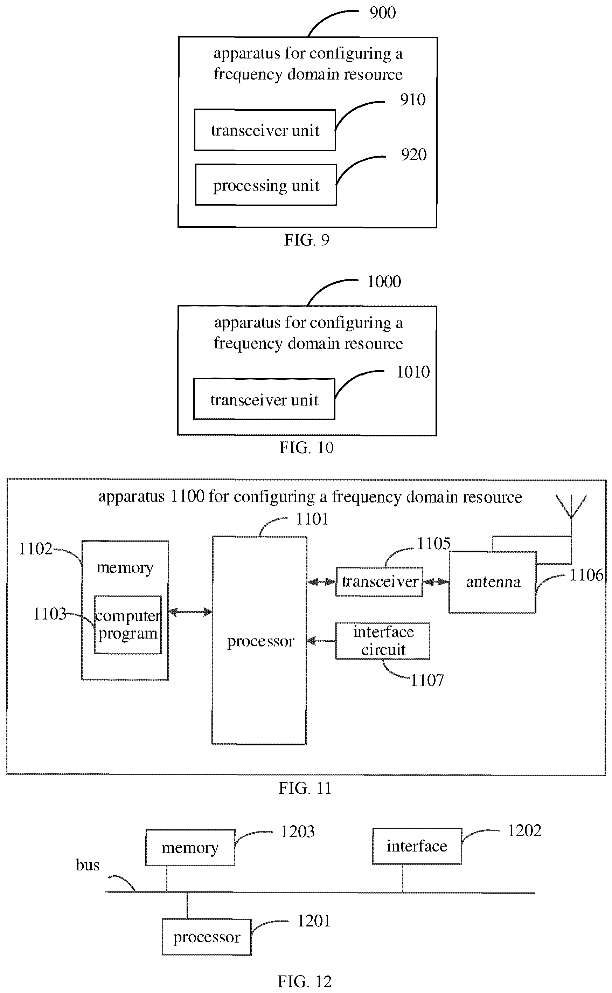

Referring to FIG. 9, FIG. 9 is a schematic block diagram illustrating an apparatus for configuring a frequency domain resource according to an embodiment of the present disclosure.

As shown in FIG. 9, the apparatus 900 for configuring a frequency domain resource includes: a transceiver unit 910 and a processing unit 920.

The transceiver unit 910 is configured to receive configuration information sent by a network device, in which the configuration information is used to configure a frequency domain resource of an MsgA PUSCH in a two-step random access.

The processing unit 920 is configured to determine a target frequency domain resource according to the configuration information.

The transceiver unit 910 is further configured to send the MsgA PUSCH to the network device by using the target frequency domain resource.

The terminal is an eRedCap terminal.

Optionally, a size of the frequency domain resource configured in the configuration information does not exceed a maximum bandwidth supported by the terminal, and the target frequency domain resource is the frequency domain resource configured in the configuration information.

Optionally, the size of the frequency domain resource configured in the configuration information exceeds the maximum bandwidth supported by the terminal, and the terminal does not support the two-step random access.

Optionally, the size of the frequency domain resource configured in the configuration information exceeds the maximum bandwidth supported by the terminal, and the processing unit 920, according to the configuration information, is specifically configured to:
determine the target frequency domain resource from the configured frequency domain resource according to a protocol agreement or indication information sent by the network device.

Optionally, a frequency domain resource unit with a lowest frequency in the target frequency domain resource is aligned with a frequency domain resource unit with the lowest frequency in the configured frequency domain resource; or
a frequency domain resource unit with a highest frequency in the target frequency domain resource is aligned with a frequency domain resource unit with the highest frequency in the configured frequency domain resource; or
a central frequency domain resource unit of the target frequency domain resource is aligned with a central frequency domain resource unit of the configured frequency domain resource.

Optionally, the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

Optionally, the processing unit 920 is further configured to calculate a size of a TB of the MsgA PUSCH.

Optionally, the size of the TB is calculated according to the number of frequency domain resource units occupied by the configured frequency domain resource; or
the size of the TB is calculated according to the number of frequency domain resource units occupied by the target frequency domain resource.

Optionally, an RSRP threshold corresponding to the two-step random access of the eRedCap terminal is higher than an RSRP threshold corresponding to the two-step random access of a non-eRedCap terminal in a case where the size of the TB is calculated according to the number of frequency domain resource units occupied by the configured frequency domain resource.

Optionally, configuration information sent by the network device to the eRedCap terminal is different from configuration information sent by the network device to the non-eRedCap terminal.

Optionally, the transceiver unit 910 is further configured to:
send first information to the network device, in which the first information indicates that a type of the terminal is the eRedCap terminal.

Optionally, the first information is included in an MsgA PRACH; or
the first information is included in a DMRS of the MsgA PUSCH; or
the first information is implicitly indicated via the target frequency domain resource used for transmission of the MsgA PUSCH.

With the apparatus for configuring a frequency domain resource, the configuration information sent by the network device is received, in which the configuration information is used to configure the frequency domain resource of the MsgA PUSCH in the two-step random access, the target frequency domain resource is determined according to the configuration information, and the MsgA PUSCH is sent to the network device by using the target frequency domain resource, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

Referring to FIG. 10, FIG. 10 is a schematic block diagram illustrating an apparatus for configuring a frequency domain resource according to an embodiment of the present disclosure.

As shown in FIG. 10, the apparatus 1000 for configuring a frequency domain resource includes: a transceiver unit 1010.

The transceiver unit 1010 is configured to send configuration information to a terminal, in which the configuration information is used to configure a frequency domain resource of an MsgA PUSCH in a two-step random access.

The transceiver unit 1010 is further configured to receive the MsgA PUSCH sent by the terminal using a target frequency domain resource, in which the target frequency domain resource is determined by the terminal according to the configuration information.

The terminal is an eRedCap terminal.

Optionally, a size of the frequency domain resource configured in the configuration information does not exceed a maximum bandwidth supported by the terminal, and the target frequency domain resource is the frequency domain resource configured in the configuration information.

Optionally, the size of the frequency domain resource configured in the configuration information exceeds the maximum bandwidth supported by the terminal, and the terminal does not support the two-step random access.

Optionally, the size of the frequency domain resource configured in the configuration information exceeds the maximum bandwidth supported by the terminal, and the target frequency domain resource is determined by the terminal from the configured frequency domain resource according to a protocol agreement or indication information sent by the network device.

Optionally, a frequency domain resource unit with a lowest frequency in the target frequency domain resource is aligned with a frequency domain resource unit with the lowest frequency in the configured frequency domain resource; or
a frequency domain resource unit with a highest frequency in the target frequency domain resource is aligned with a frequency domain resource unit with the highest frequency in the configured frequency domain resource; or
a central frequency domain resource unit of the target frequency domain resource is aligned with a central frequency domain resource unit of the configured frequency domain resource.

Optionally, the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

Optionally, configuration information sent by the network device to the eRedCap terminal is different from configuration information sent by the network device to a non-eRedCap terminal.

Optionally, the apparatus further includes a processing unit (not shown in the figure). The processing unit is configured to:
perform blind detection according to the configured frequency domain resource to decode the MsgA PUSCH; and
perform the blind detection according to a frequency domain resource corresponding to the eRedCap terminal to decode the MsgA PUSCH, in response to a failure to decode the MsgA PUSCH.

Optionally, the transceiver unit 1010 is further configured to:
receive first information sent by the terminal, in which the first information indicates that a type of the terminal is the eRedCap terminal.

Optionally, the first information is included in an MsgA PRACH; or
the first information is included in a DMRS of the MsgA PUSCH; or
the first information is implicitly indicated via the target frequency domain resource used for transmission of the MsgA PUSCH.

With the apparatus for configuring a frequency domain resource, the configuration information is sent to the terminal, in which the configuration information is used to configure the frequency domain resource of the MsgA PUSCH in the two-step random access, and the MsgA PUSCH sent by the terminal using the target frequency domain resource is received, in which the target frequency domain resource is determined by the terminal according to the configuration information, such that transmission on the uplink channel in the two-step random access may be performed within the baseband processing capability range of the RedCap terminal, while ensuring correct reception of the network device, thereby effectively improving the channel transmission performance and ensuring the reliability of communication transmission.

In order to implement the above embodiments, embodiments of the present disclosure also propose a communication apparatus, including: a processor; and a memory storing a computer program, in which the processor executes the computer program stored in the memory to enable the apparatus to perform the method shown in any of the embodiments of FIG. 2 to FIG. 5 and FIG. 7.

In order to implement the above embodiments, embodiments of the present disclosure also propose a communication apparatus, including: a processor; and a memory storing a computer program, in which the processor executes the computer program stored in the memory to enable the apparatus to perform the method shown in the embodiment of FIG. 8.

In order to implement the above embodiments, embodiments of the present disclosure also propose a communication apparatus, including: a processor; and an interface circuit, in which the interface circuit is configured to receive code instructions and transmit the code instructions to the processor; and the processor is configured to execute the code instructions to perform the method shown in any of the embodiments of FIG. 2 to FIG. 5 and FIG. 7.

In order to implement the above embodiments, embodiments of the present disclosure also propose a communication apparatus, including: a processor; and an interface circuit, in which the interface circuit is configured to receive code instructions and transmit the code instructions to the processor; and the processor is configured to execute the code instructions to perform the method shown in the embodiment of FIG. 8.

Referring to FIG. 11, FIG. 11 is a schematic block diagram illustrating an apparatus for configuring a frequency domain resource according to an embodiment of the present disclosure. The apparatus 1100 for configuring a frequency domain resource may be a network device or a terminal, or may be a chip, a chip system, or a processor supporting the network device to implement the above-mentioned method, or may be a chip, a chip system or a processor supporting the terminal to implement the above-mentioned method. The apparatus may be used to implement the methods as described in the method embodiments described above, with particular reference to the description of the method embodiments described above.

The apparatus 1100 for configuring a frequency domain resource may include one or more processors 1101. The processor 1101 may be a general-purpose processor or a special-purpose processor, etc. It may be, for example, a baseband processor or a central processor. The baseband processor may be used to process a communication protocol and communication data, and the central processor may be used to control a communication device (such as a base station, a baseband chip, a terminal, a terminal chip, a DU or a CU, etc.), execute a computer program, and process data of the computer program.

Optionally, the apparatus 1100 for configuring a frequency domain resource may further include one or more memories 1102 on which the computer program 1103 may be stored, and the processor 1101 executes the computer program 1103 to cause the apparatus 1100 for configuring a frequency domain resource to perform the method as described in the above method embodiments. The computer program 1103 may be solidified in the processor 1101, in which case the processor 1101 may be implemented in hardware.

Optionally, the memory 1102 may also have data stored therein. The apparatus 1100 for configuring a frequency domain resource and the memory 1102 may be provided independently or integrated together.

Optionally, the apparatus 1100 for configuring a frequency domain resource may further include a transceiver 1105 and an antenna 1106. The transceiver 1105 may be referred to as a transceiving unit, a transceiving machine, or a transceiving circuit or the like for implementing a transceiving function. The transceiver 1105 may include a receiver and a transmitter, the receiver may be referred to as a receiving machine, a receiving circuit or the like for implementing a receiving function; and the transmitter may be referred to as a transmitting machine, a transmission circuit or the like for implementing a transmission function.

Optionally, the apparatus 1100 for configuring a frequency domain resource may further include one or more interface circuits 1107. The interface circuit 1107 is configured to receive and transmit code instructions to the processor 1101. The processor 1101 executes the code instructions to enable the apparatus 1100 for configuring a frequency domain resource to perform the method described in any of the above method embodiments.

In an implementation, the processor 1101 may include the transceiver for implementing the receiving and transmitting functions. For example, the transceiver may be a transceiving circuit, an interface, or an interface circuit. The transceiving circuit, the interface, or the interface circuit for implementing the receiving and transmitting functions may be separate or integrated. The transceiving circuit, the interface or the interface circuit may be configured to read and write code/data, or may be configured to transmit or transfer signals.

In an implementation, the apparatus 1100 for configuring a frequency domain resource may include a circuit that may perform the transmitting, receiving or communicating functions in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The apparatus for configuring a frequency domain resource described in the above embodiments may be a network device or a terminal, but the scope of the apparatus for configuring a frequency domain resource described in the present disclosure is not limited thereto. The structure of the apparatus for configuring a frequency domain resource may not be limited by FIG. 10 and FIG. 11. The apparatus for configuring a frequency domain resource may be a stand-alone device or may be part of a larger device. For example, the apparatus for configuring a frequency domain resource may be:
(1) a stand-alone integrated circuit (IC), or a chip, or a chip system or a subsystem;
(2) a set of one or more ICs, optionally the set of ICs may also include a storage component for storing the data and the computer program;
(3) an ASIC such as a modem;
(4) modules that may be embedded in other devices;
(5) a receiver, a terminal, an intelligent terminal, a cellular phone, a wireless device, a handset, a mobile unit, an on-vehicle device, a network device, a cloud device, an artificial intelligence device, etc.;
(6) Others.

For the case where the apparatus for configuring a frequency domain resource may be a chip or a chip system, reference may be made to the schematic block diagram of the chip shown in FIG. 12. The chip shown in FIG. 12 includes a processor 1201 and an interface 1202. There may be one or more processors 1201 and multiple interfaces 1202.

For the case where the chip is configured to implement the function of the terminal in embodiments of the present disclosure:
the interface 1202 is configured to receive code instructions and transmit the code instructions to the processor; and
the processor 1201 is configured to execute the code instructions to perform the method shown in any of FIG. 2 to FIG. 5 and FIG. 7.

For the case where the chip is configured to implement the function of the network device in embodiments of the present disclosure:
the interface 1202 is configured to receive code instructions and transmit the code instructions to the processor; and
the processor 1201 is configured to execute the code instructions to perform the method shown in FIG. 8.

Optionally, the chip further includes a memory 1203, in which the memory 1203 is configured to store necessary computer programs and data.

Those skilled in the art may further appreciate that the various illustrative logical blocks and steps described in embodiments of the present disclosure may be implemented in electronic hardware, computer software, or a combination thereof. Whether such functionality is implemented as hardware or software depends upon particular application and design requirement of the overall system. Those skilled in the art may implement the described functionality in varying ways for each particular application, but such implementation should not be understood as beyond the scope of protection of embodiments of the present disclosure.

Embodiments of the present disclosure also provide a communication system. The system includes the communication device as the terminal and the communication device as the network device in the embodiments of FIG. 9 and FIG. 10. Alternatively, the system includes the apparatus for configuring the frequency domain resource as the terminal and the apparatus for configuring the frequency domain resource as the network device in the embodiment of FIG. 11.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of a computer program product. The computer program product includes one or more computer programs. When the computer program is loaded and executed on the computer, all or part of the processes or functions according to the embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art may understand that the first, second, and other numeral numbers involved in the present disclosure are only for convenience of description, and are not intended to limit the scope of the embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) may be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art may appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, for the specific working process of the above-described system, device and unit reference may be made to the corresponding process in the foregoing method embodiments, and details will not be repeated here.

It should be understood that steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the principle of the disclosure shall be included in the protection scope of disclosure.

## Claims

1. A method for configuring a frequency domain resource, performed by a terminal, comprising:
receiving configuration information sent by a network device, wherein the configuration information is used to configure a frequency domain resource of a random access message MsgA physical uplink shared channel (PUSCH) in a two-step random access;
determining a target frequency domain resource according to the configuration information; and
sending the MsgA PUSCH to the network device by using the target frequency domain resource,
wherein the terminal is an evolved reduced capability (eRedCap) terminal.

2. The method of claim 1, wherein a size of the frequency domain resource configured in the configuration information does not exceed a maximum bandwidth supported by the terminal, and the target frequency domain resource is the frequency domain resource configured in the configuration information.

3. The method of claim 1, wherein a size of the frequency domain resource configured in the configuration information exceeds a maximum bandwidth supported by the terminal, and the terminal does not support the two-step random access.

4. The method of claim 1, wherein a size of the frequency domain resource configured in the configuration information exceeds a maximum bandwidth supported by the terminal, and determining the target frequency domain resource according to the configuration information comprises:
determining the target frequency domain resource from the frequency domain resource according to a protocol agreement or indication information sent by the network device.

5. The method of claim 4, wherein
a frequency domain resource unit with a lowest frequency in the target frequency domain resource is aligned with a frequency domain resource unit with the lowest frequency in the frequency domain resource; or
a frequency domain resource unit with a highest frequency in the target frequency domain resource is aligned with a frequency domain resource unit with the highest frequency in the frequency domain resource; or
a central frequency domain resource unit of the target frequency domain resource is aligned with a central frequency domain resource unit of the frequency domain resource.

6. The method of claim 4, wherein the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

7. The method of claim 4, further comprising:
calculating a size of a transmission block (TB) of the MsgA PUSCH.

8. The method of claim 7, wherein
the size of the TB is calculated according to a number of frequency domain resource units occupied by the frequency domain resource; or
the size of the TB is calculated according to a number of frequency domain resource units occupied by the target frequency domain resource.

9. The method of claim 8, wherein a reference signal receiving power (RSRP) threshold corresponding to the two-step random access of the eRedCap terminal is higher than an RSRP threshold corresponding to the two-step random access of a non-eRedCap terminal in a case where the size of the TB is calculated according to the number of frequency domain resource units occupied by the frequency domain resource.

10. The method of claim 1, wherein configuration information sent by the network device to the eRedCap terminal is different from configuration information sent by the network device to a non-eRedCap terminal.

11. The method of claim 4 or 10, further comprising:
sending first information to the network device, wherein the first information indicates that a type of the terminal is the eRedCap terminal.

12. The method of claim 11, wherein
the first information is comprised in an MsgA physical random access channel (PRACH); or
the first information is comprised in a demodulation reference signal (DMRS) of the MsgA PUSCH; or
the first information is implicitly indicated via the target frequency domain resource used for transmission of the MsgA PUSCH.

13. A method for configuring a frequency domain resource, performed by a network device, comprising:
sending configuration information to a terminal, wherein the configuration information is used to configure a frequency domain resource of a random access message MsgA physical uplink shared channel (PUSCH) in a two-step random access; and
receiving the MsgA PUSCH sent by the terminal using a target frequency domain resource, wherein the target frequency domain resource is determined by the terminal according to the configuration information,
wherein the terminal is an evolved reduced capability (eRedCap) terminal.

14. The method of claim 13, wherein a size of the frequency domain resource configured in the configuration information does not exceed a maximum bandwidth supported by the terminal, and the target frequency domain resource is the frequency domain resource configured in the configuration information.

15. The method of claim 13, wherein a size of the frequency domain resource configured in the configuration information exceeds a maximum bandwidth supported by the terminal, and the terminal does not support the two-step random access.

16. The method of claim 13, wherein a size of the frequency domain resource configured in the configuration information exceeds a maximum bandwidth supported by the terminal, and the target frequency domain resource is determined by the terminal from the frequency domain resource according to a protocol agreement or indication information sent by the network device.

17. The method of claim 16, wherein
a frequency domain resource unit with a lowest frequency in the target frequency domain resource is aligned with a frequency domain resource unit with the lowest frequency in the frequency domain resource; or
a frequency domain resource unit with a highest frequency in the target frequency domain resource is aligned with a frequency domain resource unit with the highest frequency in the frequency domain resource; or
a central frequency domain resource unit of the target frequency domain resource is aligned with a central frequency domain resource unit of the frequency domain resource.

18. The method of claim 16, wherein the indication information sent by the network device indicates any one or more of the following parameters:
a starting frequency domain resource unit of the target frequency domain resource;
an ending frequency domain resource unit of the target frequency domain resource; or
a number of frequency domain resource units occupied by the target frequency domain resource.

19. The method of claim 13, wherein configuration information sent by the network device to the eRedCap terminal is different from configuration information sent by the network device to a non-eRedCap terminal.

20. The method of claim 16 or 19, further comprising:
performing blind detection according to the frequency domain resource configured in the configuration information to decode the MsgA PUSCH; and
performing the blind detection according to a frequency domain resource corresponding to the eRedCap terminal to decode the MsgA PUSCH, in response to a failure to decode the MsgA PUSCH.

21. The method of claim 16 or 19, further comprising:
receiving first information sent by the terminal, wherein the first information indicates that a type of the terminal is the eRedCap terminal.

22. The method of claim 21, wherein
the first information is comprised in an MsgA physical random access channel (PRACH); or
the first information is comprised in a demodulation reference signal (DMRS) of the MsgA PUSCH; or
the first information is implicitly indicated via the target frequency domain resource used for transmission of the MsgA PUSCH.

23. An apparatus for configuring a frequency domain resource, applied to a terminal, comprising:
a transceiver unit configured to receive configuration information sent by a network device, wherein the configuration information is used to configure a frequency domain resource of a random access message MsgA physical uplink shared channel (PUSCH) in a two-step random access; and
a processing unit configured to determine a target frequency domain resource according to the configuration information;
wherein the transceiver unit is further configured to send the MsgA PUSCH to the network device by using the target frequency domain resource,
wherein the terminal is an evolved reduced capability (eRedCap) terminal.

24. An apparatus for configuring a frequency domain resource, applied to a network device, comprising:
a transceiver unit configured to send configuration information to a terminal, wherein the configuration information is used to configure a frequency domain resource of a random access message MsgA physical uplink shared channel (PUSCH) in a two-step random access;
wherein the transceiver unit is further configured to receive the MsgA PUSCH sent by the terminal using a target frequency domain resource, wherein the target frequency domain resource is determined by the terminal according to the configuration information,
wherein the terminal is an evolved reduced capability (eRedCap) terminal.

25. A communication apparatus, comprising:
a processor; and
a memory storing a computer program,
wherein the processor executes the computer program stored in the memory to enable the apparatus to perform the method of any one of claims 1 to 12, or to perform the method of any one of claims 13 to 22.

26. A communication apparatus, comprising:
a processor; and
an interface circuit,
wherein the interface circuit is configured to receive code instructions and transmit the code instructions to the processor; and
the processor is configured to execute the code instructions to perform the method of any one of claims 1 to 12, or to perform the method of any one of claims 13 to 22.

27. A computer-readable storage medium for storing instructions that, when executed, cause the method of any one of claims 1 to 12 to be implemented, or cause the method of any one of claims 13 to 22 to be implemented.

28. A communication system, comprising:
a terminal configured to perform the method of any one of claims 1 to 12; and
a network device configured to perform the method of any one of claims 13 to 22.
